# EUROPEAN PATENT APPLICATION

(11) **EP 3 945 482 A1**
(43) Date of publication of application: **02.02.2022**
(21) Application number: 21182020.4
(22) Date of filing: 28.06.2021
(51) Int. Cl.: G06Q 10/08

(54) **DELIVERY SYSTEM, DELIVERY METHOD, AND PROGRAM**

(30) Priority: 28.07.2020 JP 2020127052
(71) Applicant: TOYOTA JIDOSHA KABUSHIKI KAISHA, Toyota-shi, Aichi-ken 471-8571 (JP)
(72) Inventor: IWAMOTO, Kunihiro, Aichi-ken, 471-8571 (JP); KOMURA, Hirotaka, Aichi-ken, 471-8571 (JP); ITOZAWA, Yuta, Aichi-ken, 471-8571 (JP)
(74) Representative: D Young & Co LLP

(57) **Abstract**

A delivery system configured to put an article into a freight-and-passenger vehicle (40), which travels according to an operation schedule, and transport the article by the freight-and-passenger vehicle (40), and then unload the article from the freight-and-passenger vehicle (40) and deliver the article to a delivery destination is provided. The freight-and-passenger vehicle (40) is configured to cause a computer to perform processes of notifying a passenger on the freight-and-passenger vehicle (40) transporting the article of a request for requesting the passenger to deliver the article from a stop place where the article is unloaded to a delivery destination thereof, and giving an incentive to the passenger who has undertaken the request after the passenger has delivered the article.

## Description

### BACKGROUND

The present disclosure relates to a delivery system, a delivery method, and a program.

Japanese Unexamined Patent Application Publication No. 2019-69853 discloses a delivery system in which a transportation vehicle that carries therein a delivery vehicle that delivers an article travels to the vicinity of the destination of the delivery (hereinafter also referred to as "delivery destination") of the article, and then the delivery vehicle gets off the transportation vehicle and delivers the article to the delivery destination.

### SUMMARY

It should be noted that a freight-and-passenger vehicle that carries passengers and travels according to an operation schedule, but also carries and transports articles to be delivered, has been known.

In such a freight-and-passenger vehicle, it is necessary to secure a space for accommodating passengers and a space for accommodating articles in the vehicle. Therefore, the delivery vehicle disclosed in Japanese Unexamined Patent Application Publication No. 2019-69853 cannot be carried in such a freight-and-passenger vehicle, or cannot be carried therein in an appropriate manner, so that the efficiency of the delivery may deteriorate.

The present disclosure has been made in view of the above-described circumstances, and an object thereof is to provide a delivery system which uses a freight-and-passenger vehicle and of which the efficiency of the delivery is excellent.

A first exemplary aspect is a delivery system configured to put an article into a freight-and-passenger vehicle and transport the article by the freight-and-passenger vehicle, and then unload the article from the freight-and-passenger vehicle and deliver the article to a delivery destination, the freight-and-passenger vehicle being scheduled to travel according to an operation schedule, the delivery system being further configured to cause a computer to perform processes of:
notifying a passenger on the freight-and-passenger vehicle transporting the article of a request for requesting the passenger to deliver the article from a stop place where the article is unloaded to a delivery destination thereof; and
giving an incentive to the passenger who has undertaken the request after the passenger has delivered the article.

Further, another exemplary aspect is a delivery method including putting an article into a freight-and-passenger vehicle and transporting the article by the freight-and-passenger vehicle, and then unloading the article from the freight-and-passenger vehicle and delivering the article to a delivery destination, the freight-and-passenger vehicle being scheduled to travel according to an operation schedule, the delivery method further including causing a computer to perform processes of:
notifying a passenger on the freight-and-passenger vehicle transporting the article of a request for requesting the passenger to deliver the article from a stop place where the article is unloaded to a delivery destination thereof; and
giving an incentive to the passenger who has undertaken the request after the passenger has delivered the article.

Further, another exemplary aspect is a program for putting an article into a freight-and-passenger vehicle and transporting the article by the freight-and-passenger vehicle, and then unloading the article from the freight-and-passenger vehicle and delivering the article to a delivery destination, the freight-and-passenger vehicle being scheduled to travel according to an operation schedule, the program being adapted to cause a computer to perform processes of:
notifying a passenger on the freight-and-passenger vehicle transporting the article of a request for requesting the passenger to deliver the article from a stop place where the article is unloaded to a delivery destination thereof; and
giving an incentive to the passenger who has undertaken the request after the passenger has delivered the article.

As described above, in an aspect of the present disclosure, a passenger on a freight-and-passenger vehicle transporting an article is notified of a request for requesting the passenger to deliver the article from a stop place where the article is unloaded to a delivery destination thereof, and an incentive is given to the passenger who has undertaken the request after the passenger has delivered the article. That is, a passenger delivers an article on behalf of a delivery vehicle carried in the freight-and-passenger vehicle. Therefore, even when a freight-and-passenger vehicle that cannot carry a delivery vehicle or cannot carry it in an appropriate manner is used, an article can be efficiently delivered.

A passenger who gets off the freight-and-passenger vehicle at the stop place where the article is unloaded may be notified of the request. By the above-described configuration, the article can be delivered more efficiently.

When there is no passenger who undertakes the request, the freight-and-passenger vehicle that transports the article may be changed to another freight-and-passenger vehicle. By the above-described configuration, a possibility that the article is delivered by a passenger increases, so that the article can be delivered more efficiently.

A delivery vehicle capable of transporting the article may be carried in the freight-and-passenger vehicle transporting the article, and when there is no passenger who undertakes the request, the article may be transported by the delivery vehicle. By the above-described configuration, the article can be delivered even when there is no passenger who undertakes the request.

According to the present disclosure, it is possible to provide a delivery system which uses a freight-and-passenger vehicle and of which the efficiency of the delivery is excellent.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram of a delivery system according to a first embodiment;
Fig. 2 is a schematic side view showing the interior of a freight-and-passenger vehicle 40 in the delivery system according to the first embodiment;
Fig. 3 is a flowchart showing a delivery method according to the first embodiment;
Fig. 4 is a schematic side view showing an example of the interior of a freight-and-passenger vehicle 40 in a delivery system according to a second embodiment;
Fig. 5 is a flowchart showing a delivery method according to the second embodiment; and
Fig. 6 is a schematic side view showing an example of the interior of a freight-and-passenger vehicle 40 in a delivery system according to a third embodiment.

### DESCRIPTION OF EMBODIMENTS

Specific embodiments will be described hereinafter in detail with reference to the drawings. The same or corresponding elements are denoted by the same reference numerals or symbols throughout the drawings, and redundant descriptions thereof are omitted as appropriate for clarifying the descriptions.

### (First Embodiment)

### <Configuration of Delivery System>

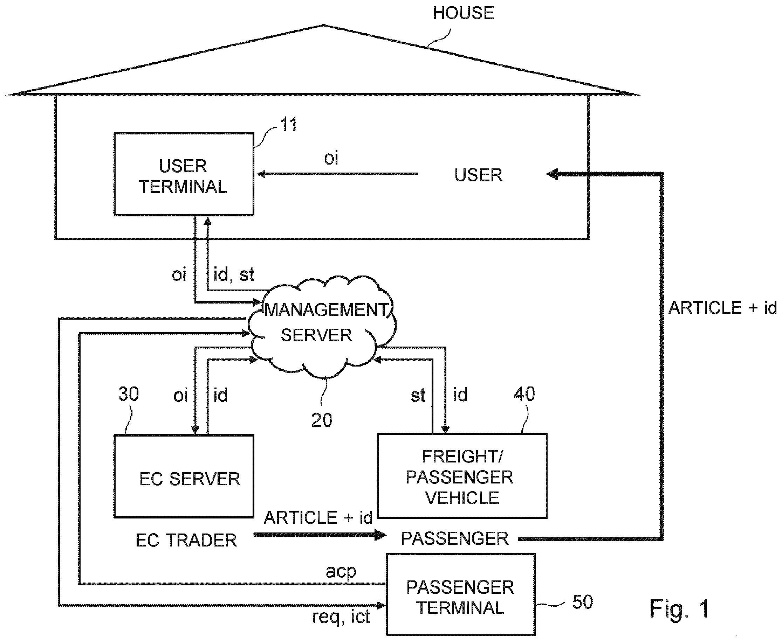

Firstly, a delivery system according to a first embodiment will be described with reference to Fig. 1. Fig. 1 is a block diagram of a delivery system according to the first embodiment. As shown in Fig. 1, the delivery system according to this embodiment includes a user terminal 11, a management server 20, an EC (Electronic Commerce) server 30, a freight-and-passenger vehicle 40, and a passenger terminal 50.

Each of the user terminal 11, the management server 20, the EC server 30, the freight-and-passenger vehicle 40, and the passenger terminal 50 includes, for example, an arithmetic unit such as a CPU (Central Processing Unit), and a storage unit such as a RAM (Random Access Memory) and a ROM (Read Only Memory) in which various control programs, data, and the like are stored. That is, each of the user terminal 11, the management server 20, the EC server 30, the freight-and-passenger vehicle 40, and the passenger terminal 50 has a function as a computer, and performs the below-shown processes based on the aforementioned various control programs and the like.

As shown in Fig. 1, the user terminal 11 is a communication terminal that is connected to the management server 20 through a cable or wirelessly so that the user terminal 11 can communicate with the management server 20. The user terminal 11 is not limited to any particular terminal as long as it can communicate with the management server 20. For example, the user terminal 11 may be a mobile communication terminal such as a smartphone or a tablet-type terminal, or a PC (Personal Computer) installed indoors.

Note that although the user terminal 11 is located in a living space of a house in Fig. 1, the user terminal 11 may be located outside the living space in the house, or outside the house. Further, in this specification, the meaning of the term "living space" includes an office space.

As shown in Fig. 1, the user enters order information oi into the user terminal 11. The order information oi is transmitted from the user terminal 11 to the management server 20. The order information oi is information about an article(s) to be delivered, and includes, for example, information such as a name of the article, a quantity, a desired delivery date and time, a delivery destination (an address), and the like.

The management server 20 is a server that manages deliveries of articles. As shown in Fig. 1, the management server 20 is connected to the user terminal 11, the EC server 30, the freight-and-passenger vehicle 40, and the passenger terminal 50 so as to be able to communicate with them. The management server 20 is, for example, a cloud server. The management server 20 transmits order information oi received from the user terminal 11 to the EC server 30.

Further, the management server 20 also receives order identification information id issued by the EC server 30, and transmits it to the user terminal 11 and the freight-and-passenger vehicle 40. The order identification information id is information identifying the article to be delivered, and is, for example, an order number thereof.

Further, the management server 20 receives status information st indicating the delivery status of the article from the freight-and-passenger vehicle 40 and transmits it to the user terminal 11. The status information st includes, for example, information such as "Waiting to be delivered", "In-delivering" or "Delivered" as the delivery status of the article. Details of the status information st will be described later.

In the delivery system according to this embodiment, for example, the management server 20 determines a freight-and-passenger vehicle 40 that transports the ordered article and a stop place where the article is unloaded (e.g., a bus stop) based on the order information oi (e.g., the desired delivery date and time, and the delivery destination).

More specifically, the management server 20 determines, based on the desired delivery date and time, which of freight-and-passenger vehicles 40 that travel according to the operation schedule the ordered article should be loaded (i.e., put) into and transported by. In general, since the desired delivery time has some margin, a plurality of freight-and-passenger vehicles 40 can be used as candidates.

In addition, the management server 20 determines a stop place where the article is unloaded from the freight-and-passenger vehicle 40 based on the delivery destination. Note that the management server 20 may include a database for such information about transportation of articles (such as information about freight-and-passenger vehicles 40 that transport articles, and stop places where articles are unloaded).

Further, as shown in Fig. 1, the management server 20 notifies a passenger on the freight-and-passenger vehicle 40 (i.e., the determined freight-and-passenger vehicle 40) transporting the article of a request req for requesting the passenger to deliver the article from the stop place where the article is unloaded to the delivery destination. In the example shown in Fig. 1, the management server 20 notifies the passenger terminal 50 of the request req.

When the passenger accepts the request req by using the passenger terminal 50, acceptance information acp is transmitted from the passenger terminal 50 to the management server 20, and matching is obtained (i.e., a pair of the request and the passenger who undertakes it is finalized) as shown in Fig. 1. When matching is obtained as shown in Fig. 1, the passenger on the freight-and-passenger vehicle 40 gets off the freight-and-passenger vehicle 40 while taking the article with him/her, and delivers the article to the user.

Note that the passenger who delivers the article is not limited to residents in the neighborhood of the delivery destination, but may be any person. For example, the passenger who delivers the article may be a resident of the delivery destination (e.g., the user who ordered the article, the user's family, a person living with the user).

There is no particular restriction on the method for notifying a passenger of a request req.

For example, the following method is conceivable. For example, a request req is displayed in a reservation reception window for a freight-and-passenger vehicle 40 that is displayed in the passenger terminal 50. The passenger can check the request req on the reservation reception window displayed on the passenger terminal 50 when he/she reserves the freight-and-passenger vehicle 40 transporting the article.

Therefore, for example, a passenger who is about to reserve other freight-and-passenger vehicles 40 may reserve the freight-and-passenger vehicle 40 transporting the article in order to undertake the request req. Alternatively, a passenger who is about to get off the freight-and-passenger vehicle 40 at a stop place other than the stop place where the article is unloaded may get off the stop place where the article is unloaded in order to undertake the request req. Further, the management server 20 may change the freight-and-passenger vehicle 40 that transports the article so that the passenger can deliver the article by using a freight-and-passenger vehicle 40 that the passenger wants to use.

Further, a request req may be displayed on a reservation confirmation widow for a freight-and-passenger vehicle 40 that is displayed in the passenger terminal 50. The passenger can check the request req on the reservation confirmation widow displayed in the passenger terminal 50 when he/she confirms the reservation for the freight-and-passenger vehicle 40 transporting the article.

Further, a passenger may be notified of a request req after he/she has gotten on a freight-and-passenger vehicle 40. For example, when a passenger who is going to (i.e., is supposed to) deliver the article does not get on the freight-and-passenger vehicle 40 transporting the article or cancels the undertaking of the request after getting on the freight-and-passenger vehicle 40, other passengers on the freight-and-passenger vehicle 40 may be notified of the request req.

Note that when a passenger who is going to deliver the article mistakenly gets on a freight-and-passenger vehicle 40 different from the freight-and-passenger vehicle 40 transporting the article, information indicating the mistake, for example, may be sent from the management server 20 to the passenger terminal 50, so that the passenger is prevented from getting on the wrong freight-and-passenger vehicle 40. Further, when the passenger who is going to deliver the article travels by using a freight-and-passenger vehicle 40 different from the freight-and-passenger vehicle 40 transporting the article, it may be considered that the passenger has cancelled the undertaking.

Note that the management server 20 may include a database for information about reservations by passengers (such as information about freight-and-passenger vehicles 40 that passengers use, and stop places where passengers get off) in addition to the above-described database for information about transportation of articles. The database may include passenger delivery success rates, request acceptance rates, and the like. The delivery success rate is a ratio of the number of successful deliveries to the number of acceptances of requests. The request acceptance rate is a ratio of the number of acceptances of requests to the number of times requests are issued.

Further, the management server 20 may notify a plurality of passengers of the same request req in descending order of their suitableness for the request for the delivery of the article based on both the databases until matching is obtained. Further, when the passenger who has accepted the request req cancels the acceptance, another passenger may be notified of the request req to try to obtain matching again.

For example, the management server 20 first notifies a passenger who gets on the freight-and-passenger vehicle 40 transporting article and gets off it at a stop place where the article is unloaded of the request req. For example, passengers are notified of the request req in descending order of their request acceptance rates or the like. When there is no passenger who gets off the freight-and-passenger vehicle 40 at the stop place where the article is unloaded, or when no matching is obtained for any passengers who get off the freight-and-passenger vehicle 40 at the stop place where the article is unloaded, the management server 20 changes, for example, the freight-and-passenger vehicle 40 that transports the ordered article. Alternatively, the management server 20 may notify a passenger who gets off the freight-and-passenger vehicle 40 at a stop place adjacent to the stop place where the article is unloaded of the request req.

The EC server 30 is, for example, a server constituting an EC site on the Internet managed by an EC trader. As shown in Fig. 1, the EC server 30, which is connected to the management server 20 so as to be able to communicate with the management server 20, issues order identification information id according to the order information oi received from the management server 20 and transmits the issued order identification information id to the management server 20.

Note that instead of the management server 20, the EC server 30 may determine the freight-and-passenger vehicle 40 for transporting the ordered article and the stop place where the article is unloaded based on the order information oi.

The order identification information id is, for example, text (i.e., letters), a symbol, a bar code, a 2D (two-dimensional) code, a RFID (Radio Frequency IDentifier), or the like, and is directly or indirectly assigned to the article. More specifically, the order identification information id is directly stuck on the article or embedded in the article. Alternatively, the order identification information id may be stuck on or embedded in the package of the article, and may be indirectly attached to the article. Note that the package is not limited to any particular packages, and may be, for example, a box, a bag, or a sheet made of paper or vinyl. The package may be a disposable type, or may be a reusable type such as a returnable box.

Note that as shown in Fig. 1, the article to which the order identification information id is attached is transported from the EC trader by the freight-and-passenger vehicle 40 and then delivered to the user by the passenger.

For example, the status information st, which indicates the delivery status of the article, is "Waiting to be delivered" in a period from when the freight-and-passenger vehicle 40 receives the order identification information id to when the article is loaded (i.e., put) into the freight-and-passenger vehicle 40 at the EC trader.

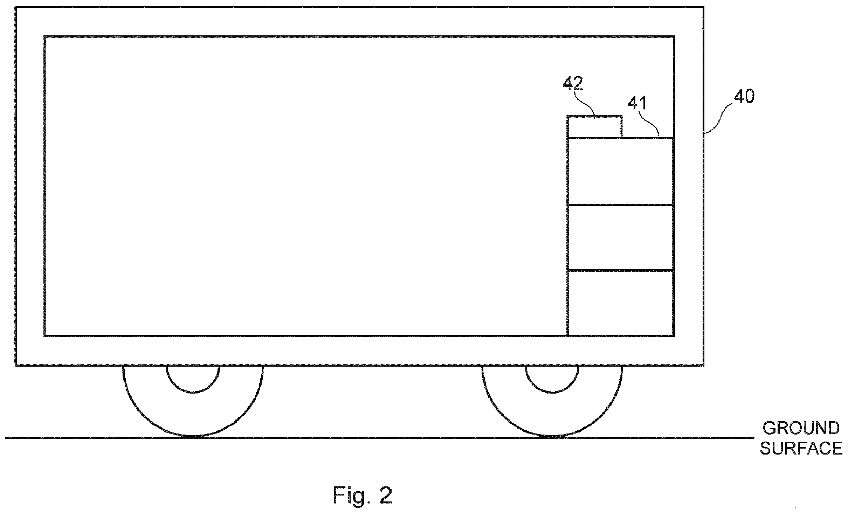

When the article is loaded into the freight-and-passenger vehicle 40 at the EC trader and the order identification information id attached to the article is read by a reader 42 (see Fig. 2) (which will be described later), the status information st changes to "In-delivering".

Then, when the passenger, who was on the freight-and-passenger vehicle 40, delivers the article to the user (i.e., when the delivery of the article has been completed), the order identification information id attached to the article is read, for example, by the passenger terminal 50 and transmitted to the management server 20, the status information st changes to "Delivered". When the status information st changes to the "Delivered", the management server 20 sends an incentive ict to the passenger terminal 50.

The incentive ict is a reward given to a passenger who has delivered an article, and is, for example, cash, electronic money, various types of points (e.g., shopping points), a discount coupon, or the like.

Note that the status information st is not indispensable. On the other hand, the status information st may also be transmitted to the EC server 30.

The freight-and-passenger vehicle 40 is a vehicle that transports passengers together with articles, and includes, inside the vehicle, a space for accommodating passengers and a space for accommodating articles. The freight-and-passenger vehicle 40 is, for example, an autonomous traveling vehicle. The cost for deliveries can be reduced by using an autonomous traveling vehicle.

Here, Fig. 2 is a schematic side view showing the interior of the freight-and-passenger vehicle 40 in the delivery system according to the first embodiment. In the example shown in Fig. 2, the freight-and-passenger vehicle 40 includes lockable storage boxes 41 for storing articles. A passenger terminal 50 of a passenger who delivers an article is notified of a key for unlocking one of the storage boxes 41 (e.g., order identification information id, a PIN (Personal Identification Number), or the like). Therefore, only the passenger who delivers the article can unlock the corresponding storage box 41 and take out the article to be delivered therefrom. That is, it is possible to prevent other passengers from taking out the article, and to prevent a passenger who delivers an article from mistakenly taking out a different article.

Note that the freight-and-passenger vehicle 40 may be configured so that storage boxes 41 are provided in the ceiling part of the freight-and-passenger vehicle 40 and articles are passed to passengers who deliver the articles through a chute or a conveyor.

Further, as shown in Fig. 2, the freight-and-passenger vehicle 40 includes, for example, a reader 42 capable of reading order identification information id attached to an article. Further, as shown in Fig. 1, the freight-and-passenger vehicle 40 is wirelessly connected to the management server 20 so as to be able to communicate with the management server 20. The freight-and-passenger vehicle 40 receives order identification information id from the management server 20, and transmits status information st indicating the delivery status of the article (i.e., the transportation status of the passenger terminal 50) to the management server 20.

The description is continued by referring Fig. 1 again.

The passenger terminal 50 is a portable communication terminal wirelessly connected to the management server 20 so as to be able to communicate with the management server 20. The passenger terminal 50 is not limited to any particular apparatuses and the like as long as it can wirelessly communicate with the management server 20, and may be, for example, a mobile communication terminal such as a smartphone or a tablet-type terminal.

As shown in Fig. 1, the passenger terminal 50 receives a request req from the management server 20 and transmits acceptance information acp to the management server 20.

As described above, in the delivery system according to this embodiment, after an article is loaded (i.e., put) into and transported by a freight-and-passenger vehicle 40, which travels according to an operation schedule, the article is unloaded from the freight-and-passenger vehicle 40 and delivered to the delivery destination. Note that a passenger on the freight-and-passenger vehicle 40 transporting the article is notified of a request req requesting the passenger to deliver the article from a stop place where the article is unloaded to the delivery destination. Then, an incentive ict is given to the passenger who has delivered the article according to the request req. In the delivery system according to this embodiment, the above-described series of processes are performed by a computer.

As described above, in the delivery system according to this embodiment, a passenger on the freight-and-passenger vehicle 40 transporting the article is requested to deliver the article, and an incentive ict is given to the passenger. That is, the passenger delivers the article on behalf of the delivery vehicle carried in the freight-and-passenger vehicle 40. Therefore, even when a freight-and-passenger vehicle that cannot carry a delivery vehicle or cannot carry it in an appropriate manner is used, an article can be efficiently delivered. That is, it is possible to provide a delivery system which uses a freight-and-passenger vehicle and of which the efficiency of the delivery is excellent.

### <Delivery Method>

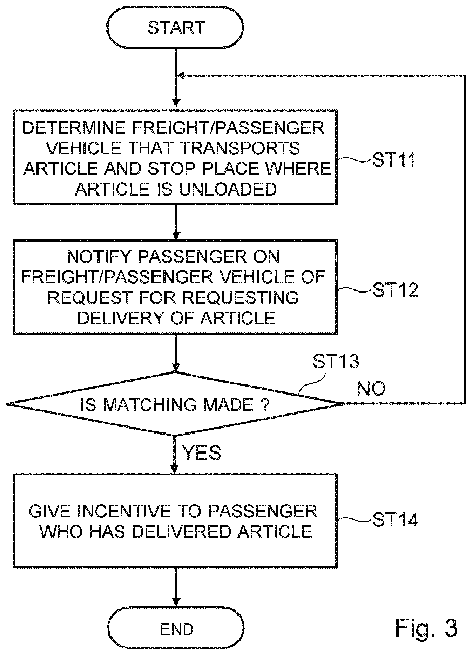

Next, a delivery method according to the first embodiment will be described with reference to Fig. 3. Fig. 3 is a flowchart showing a delivery method according to the first embodiment. In the following explanation using Fig. 3, Fig. 1 is also referred to as appropriate.

Firstly, as shown in Fig. 3, a freight-and-passenger vehicle 40 that transports an ordered article and a stop place (e.g., a bus stop) where the article is unloaded are determined (step ST11). More specifically, for example, the management server 20 determines, based on a desired delivery date and time included in order information oi, which of freight-and-passenger vehicles 40 that travel according to an operation schedule the ordered article should be loaded (i.e., put) into and transported by. Further, the management server 20 also determines a stop place where the article is unloaded from the freight-and-passenger vehicle 40 based on a delivery destination included in the order information oi.

Next, as shown in Fig. 3, a passenger on the freight-and-passenger vehicle 40 transporting the article is notified of a request req requesting the passenger to deliver the article from the stop place where the article is unloaded to the delivery destination (step ST12). For example, as shown in Fig. 1, the management server 20 notifies the passenger terminal 50 of the request req. Then, when the passenger accepts the request req by using the passenger terminal 50, the acceptance information acp is transmitted from the passenger terminal 50 to the management server 20, so that matching is obtained as shown in Fig. 1.

Next, as shown in Fig. 3, when matching is obtained (YES in step ST13), an incentive ict is given to the passenger after the passenger has delivered the article (step ST14). Then, the process is finished.

On the other hand, when matching is not obtained (NO in step ST13), the process returns to the step ST11 and the freight-and-passenger vehicle 40 that transports the article is changed. Noe that when matching is not obtained (NO in step ST13), the freight-and-passenger vehicle 40 that transports the articles may not be changed, and the process returns to step ST12 and another passenger may be noticed of the request req.

As described above, in the delivery system according to this embodiment, a passenger on the freight-and-passenger vehicle 40 transporting an article is requested to deliver the article, and an incentive is given to the passenger. That is, the passenger delivers the article on behalf of the delivery vehicle carried in the freight-and-passenger vehicle 40. Therefore, even when a freight-and-passenger vehicle that cannot carry a delivery vehicle or cannot carry it in an appropriate manner is used, an article can be efficiently delivered. That is, it is possible to provide a delivery system which uses a freight-and-passenger vehicle and of which the efficiency of the delivery is excellent.

### (Second Embodiment)

### <Configuration of Delivery System>

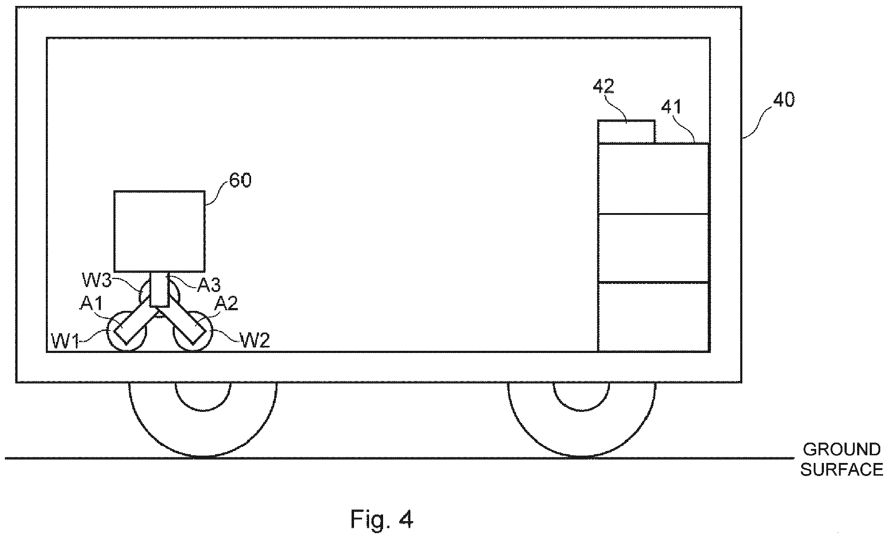

Next, a delivery system according to a second embodiment will be described with reference to Fig. 4. Fig. 4 is a schematic side view showing an example of the interior of a freight-and-passenger vehicle 40 in the delivery system according to the second embodiment.

In the delivery system according to the first embodiment, when matching is not obtained (there is no passenger who is willing to deliver the article), the article cannot be delivered. In contrast to this, in the delivery system according to this embodiment, an autonomous traveling-type delivery vehicle 60 capable of autonomously transporting an article is carried in a freight-and-passenger vehicle 40 as shown in Fig. 4. Therefore, for example, when matching is not obtained, the delivery vehicle 60, instead of the passenger, can get off the freight-and-passenger vehicle 40 and deliver the article the user. Further, when the passenger who has accepted the request req cancels the acceptance, the delivery vehicle 60 can also deliver the article to the user on behalf of the passenger.

The delivery vehicle 60 also includes, for example, an arithmetic unit such as a CPU (Central Processing Unit), and a storage unit such as a RAM (Random Access Memory) and a ROM (Read Only Memory) in which various control programs, data, and the like are stored. That is, the delivery vehicle 60 also functions as a computer, and performs the below-shown processes based on the aforementioned various control programs and the like. Further, the delivery vehicle 60 is, for example, wirelessly connected to the management server 20 and the freight-and-passenger vehicle 40 so as to be able to communicate with them.

A configuration of the delivery vehicle 60 will be described with reference to Fig. 4.

In the example shown in Fig. 4, the delivery vehicle 60 includes three pairs of wheels W1, W2 and W3, connecting arms A1 and A2, and a fixed arm A3. Note that although the delivery vehicle 60 shown in Fig. 2 is a six-wheel vehicle having six wheels W1, W2 and W3, it may be a four-wheel vehicle. That is, there is no particular restriction on the delivery vehicle 60.

The wheels W1 are rotatably connected to one end of the connecting arm A1. The other end of the connecting arm A1 is rotatably connected to the lower end of the fixed arm A3.

The wheels W2 are rotatably connected to one end of the connecting arm A2. The other end of the connecting arm A2 is rotatably connected to the lower end of the fixed arm A3.

The upper end of the fixed arm A3 is fixed to the main body of the delivery vehicle 60. The wheels W3 are rotatably connected to the lower end of the fixed arm A3.

As shown in Fig. 2, the delivery vehicle 60 can travel by using the four wheels, i.e., two pairs of wheels W1 and W2. However, the delivery vehicle 60 can also travel by using the six wheels, i.e., three pairs of wheels W1, W2 and W3. By rotating the connecting arms A1 and A2 around the connecting part between the connecting arms A1 and A2 and the fixed arm A3, the posture of the delivery vehicle 60 can be switched between the four-wheel traveling posture and the six-wheel traveling posture. In the posture of the delivery vehicle 60 in which only the four wheels W1 and W2 are in contact with the floor surface of the freight-and-passenger vehicle 40 shown in Fig. 2, the area on the floor surface occupied by the delivery vehicle 60 can be reduced compared to the area that is occupied when the delivery vehicle 60 is in the posture in which the six wheels W1, W2 and W3 are in contact with the floor surface of the freight-and-passenger vehicle 40. On the other hand, when the six wheels W1, W2 and W3 are in contact with the floor surface of the freight-and-passenger vehicle 40, the delivery vehicle 60 can travel in a more stabled manner.

### <Delivery Method>

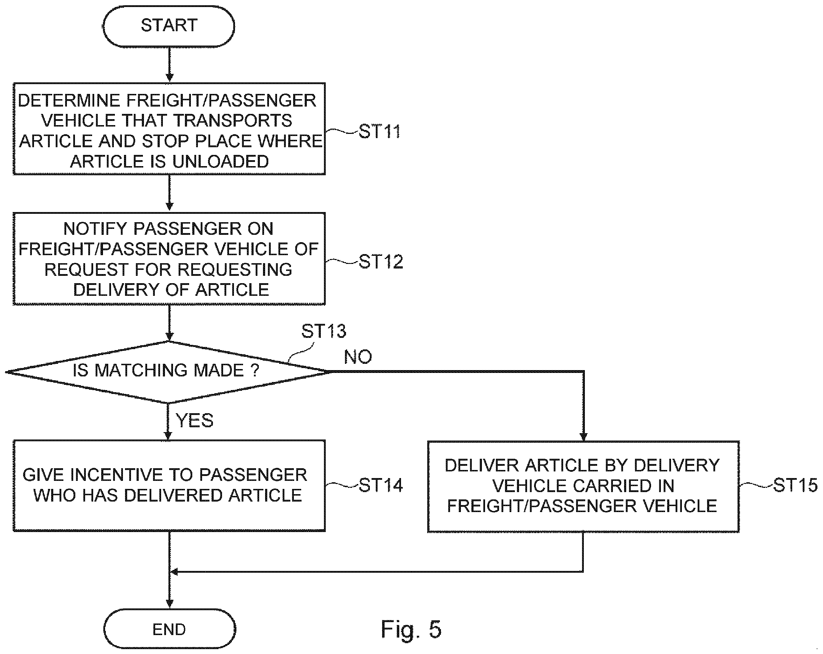

Next, a delivery method according to the second embodiment will be described with reference to Fig. 5. Fig. 5 is a flowchart showing a delivery method according to the second embodiment. In the following explanation using Fig. 5, Figs. 1 and 4 are also referred to as appropriate.

Steps ST11 to ST13 in Fig. 5 are the same as those in Fig. 3, and therefore the descriptions thereof are omitted.

As shown in Fig. 5, when matching is obtained (YES in step ST13), an incentive ict is given to the passenger after the passenger has delivered the article as in the case of the first embodiment (step ST14). Then, the process is finished.

On the other hand, when matching is not obtained (NO step ST13), in this embodiment, the delivery vehicle 60, instead of the passenger, gets off the freight-and-passenger vehicle 40 and delivers the article to the user (step ST15). Therefore, the article can be delivered even when matching is not obtained.

The rest of the configuration is similar to that of the first embodiment, and therefore the description thereof is omitted.

### (Third Embodiment)

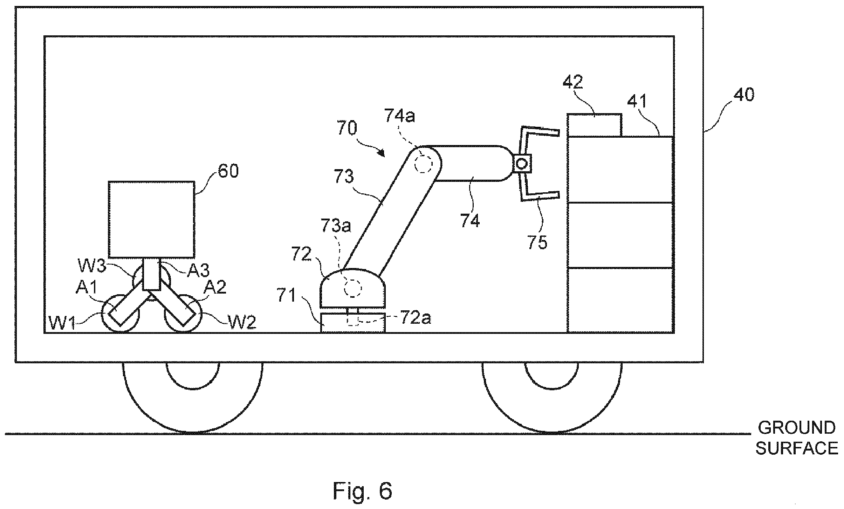

Next, a delivery system and a delivery method according to a third embodiment will be described with reference to Fig. 6. Fig. 6 is a schematic side view showing an example of the interior of a freight-and-passenger vehicle 40 in the delivery system according to the third embodiment. Note that, in Fig. 6, illustration of the space for accommodating passengers is omitted.

In the delivery system according to the first embodiment, a passenger takes out an article from the storage box 41. In contrast to this, in the delivery system according to this embodiment, a manipulator 70 is installed inside the freight-and-passenger vehicle 40 as shown in Fig. 6. Therefore, the manipulator 70 takes out an article to be delivered from the storage box 41 and passes the article to the passenger. That is, the passenger does not need to take out the article from the storage box 41.

The manipulator 70 also includes, for example, an arithmetic unit such as a CPU (Central Processing Unit), and a storage unit such as a RAM (Random Access Memory) and a ROM (Read Only Memory) in which various control programs, data, and the like are stored. That is, the manipulator 70 also functions as a computer, and performs the below-shown processes based on the aforementioned various control programs and the like. Further, the manipulator 70 is, for example, connected to the freight-and-passenger vehicle 40 so as to be able to communicate with the freight-and-passenger vehicle 40.

A configuration of the manipulator 70 will be described with reference to Fig. 6.

The manipulator 70 includes a base part 71, a link base part 72, a first link 73, a second link 74, and an end effector 75. The manipulator 70 grasps an article and transports the grasped article by using the end effector 75.

Note that there is no restriction on the configuration of the end effector 75 as long as the end effector 75 can transport an article. For example, the manipulator 70 may suck an article and transports the sucked article by using the end effector 75. Further, although the link mechanism is composed of two links, i.e., the first and second links 73 and 74 in the example shown in Fig. 6, the link mechanism may be composed of three or more links.

The base part 71 is fixed to the floor surface of the freight-and-passenger vehicle 40.

The link base part 72 is connected to the base part 71 through a rotation shaft 72a in such a manner that the link base part 72 can rotate around the rotation shaft 72a. The rotation shaft 72a of the link base part 72 is a shaft perpendicular to the floor surface of the freight-and-passenger vehicle 40. The link base part 72 is rotationally driven by a motor or the like (not shown).

The first link 73 is rotationally connected to the link base part 72 through a first joint part 73 a provided at the rear end of the first link 73. Further, the second link 74 is rotatably connected to the front end of the first link 73 through a second joint part 74a provided at the rear end of the second link 74. The end effector 75 is connected to the front end of the second link 74.

Note that the rotation axes of the first and second joint parts 73a and 74a are parallel to the floor surface of the freight-and-passenger vehicle 40. The height of the end effector 75 can be changed by rotating the first and second links 73 and 74. Each of the first and second links 73 and 74 is rotationally driven by a motor or the like (not shown).

By the above-described configuration, the manipulator 70 can grasp and transport an article by using the end effector 75.

The rest of the configuration is similar to that of the second embodiment, and therefore the description thereof is omitted.

In the above-described examples, the various control programs can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). Further, the program may be provided to a computer using any type of transitory computer readable media. Examples of transitory computer readable media include electric signals, optical signals, and electromagnetic waves. Transitory computer readable media can provide the program to a computer through a wired communication line (e.g., electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A delivery system configured to put an article into a freight-and-passenger vehicle (40) and transport the article by the freight-and-passenger vehicle (40), and then unload the article from the freight-and-passenger vehicle (40) and deliver the article to a delivery destination, the freight-and-passenger vehicle (40) being scheduled to travel according to an operation schedule, the delivery system being further configured to cause a computer to perform processes of:
notifying a passenger on the freight-and-passenger vehicle (40) transporting the article of a request for requesting the passenger to deliver the article from a stop place where the article is unloaded to a delivery destination thereof; and
giving an incentive to the passenger who has undertaken the request after the passenger has delivered the article.

2. The delivery system according to Claim 1, wherein a passenger who gets off the freight-and-passenger vehicle (40) at the stop place where the article is unloaded is notified of the request.

3. The delivery system according to Claim 1 or 2, wherein when there is no passenger who undertakes the request, the freight-and-passenger vehicle (40) that transports the article is changed to another freight-and-passenger vehicle (40).

4. The delivery system according to Claim 1 or 2, wherein
a delivery vehicle (60) capable of transporting the article is carried in the freight-and-passenger vehicle (40) transporting the article, and
when there is no passenger who undertakes the request, the article is transported by the delivery vehicle (60).

5. A delivery method comprising putting an article into a freight-and-passenger vehicle (40) and transporting the article by the freight-and-passenger vehicle (40), and then unloading the article from the freight-and-passenger vehicle (40) and delivering the article to a delivery destination, the freight-and-passenger vehicle (40) being scheduled to travel according to an operation schedule, the delivery method further comprising causing a computer to perform processes of:
notifying a passenger on the freight-and-passenger vehicle (40) transporting the article of a request for requesting the passenger to deliver the article from a stop place where the article is unloaded to a delivery destination thereof; and
giving an incentive to the passenger who has undertaken the request after the passenger has delivered the article.

6. The delivery method according to Claim 5, wherein a passenger who gets off the freight-and-passenger vehicle (40) at the stop place where the article is unloaded is notified of the request.

7. The delivery method according to Claim 5 or 6, wherein when there is no passenger who undertakes the request, the freight-and-passenger vehicle (40) that transports the article is changed to another freight-and-passenger vehicle (40).

8. The delivery method according to Claim 5 or 6, wherein
a delivery vehicle (60) capable of transporting the article is carried in the freight-and-passenger vehicle (40) transporting the article, and
when there is no passenger who undertakes the request, the article is transported by the delivery vehicle (60).

9. A program for putting an article into a freight-and-passenger vehicle (40) and transporting the article by the freight-and-passenger vehicle, and then unloading the article from the freight-and-passenger vehicle (40) and delivering the article to a delivery destination, the freight-and-passenger vehicle (40) being scheduled to travel according to an operation schedule, the program being adapted to cause a computer to perform processes of:
notifying a passenger on the freight-and-passenger vehicle (40) transporting the article of a request for requesting the passenger to deliver the article from a stop place where the article is unloaded to a delivery destination thereof; and
giving an incentive to the passenger who has undertaken the request after the passenger has delivered the article.
